# EUROPEAN PATENT SPECIFICATION

(11) **EP 0 514 470 B1**
(45) Date of publication and mention of the grant of the patent: **03.09.1997**
(21) Application number: 91904526.0
(22) Date of filing: 24.12.1990
(51) Int. Cl.: H04J 3/06, G05B 23/02, H04Q 1/30, H04Q 7/00

(54) **MULTIPLE FREQUENCY SCANNING IN A SELECTIVE CALL COMMUNICATION SYSTEM**
Mehrfrequenzabtastung in einem Selektivrufübertragungssystem
BALAYAGE DE FREQUENCES MULTIPLES DANS UN SYSTEME DE COMMUNICATIONS A APPEL SELECTIF

(30) Priority: 02.01.1990 US 459926
(43) Date of publication of application: 25.11.1992
(73) Proprietor: MOTOROLA, INC., Schaumburg, IL 60196 (US)
(72) Inventor: SCHWENDEMAN, Robert, J., Pompano Beach, FL 33060 (US)
(74) Representative: Dunlop, Hugh Christopher
(86) International application number: US9007471
(87) International publication number: WO9110300

(56) References cited:
- EP-A- 0 325 839
- US-A- 4 249 165
- US-A- 4 509 203
- US-A- 4 833 728
- US-A- 4 914 649

## Description

### Field of the Invention

This invention relates in general to communication systems and is particularly, but not exclusively, applicable to selective call communication systems.

### Background of the Invention

Communication systems utilizing selective call addressing typically employ a receiver that has at least one unique selective call address associated therewith. This receiver is commonly referred to as a selective call receiver or pager. Paging systems for the transmission and reception of radio frequency information are well known to those skilled in the art. When a pager receives and decodes its address, the pager alerts the user to the presence of incoming information and operates to present this information.

The majority of selective call communication systems currently in use do not have the same frequency allocated in multiple metropolitan areas. Typically, this is a disadvantage because if a user wants to travel to another metropolitan area that is serviced by their paging service provider, they must have a pager that receives a channel that is operative in that new area.

At this time, there are no selective call communication systems that can operate to determine the validity of a signalling scheme present on a channel that was been acquired while "scanning." Scanning, as it is used here, means the orderly search for information on multiple frequency channels by a synthesized or crystal controlled receiver. Contemporary scanning receivers sequentially scan channels in a predetermined order that is programmed in the hardware or software of the selective call receiver. This method wastes time if there are channels on the scanning list that are inactive or do not contain information that is directed to the user's selective call receiver.

Thus, what is needed is a method for scanning a plurality of frequency channels and dynamically optimizing the scanning list in a hierarchical order to provide optimum scan sequencing for the reception of information by the selective call receiver.

US SIR No. H610 describes a cellular pager which configures itself to receive a page signal by scanning the special set of channels and the frequencies of the two channels with the best received signal strength are stored in memory. EP-A-0 352 839 describes a wide area pager system and a communication protocol having an improved TDM communication method.

### Summary of the Invention

Accordingly the invention provides, in a first aspect, an apparatus for prioritizing a receiver channel scanning order in a selective receiver in accordance with claim 1.

In a second aspect, the invention provides a communications system for communicating signalling information and prioritizing a receiver channel scanning order in accordance with claim 9.

In a third aspect, the invention provides a method for prioritizing a receiver channel scanning order in a selective receiver in accordance with claim 12.

A further aspect of the invention provides a scanning communications system that prioritizes a receiver channel scanning order in a selective receiver in accordance with claim 15.

Yet a further aspect of the invention provides a method for communicating signalling information and prioritizing a receiver channel scanning order in a selective call communications system in accordance with claim 19.

### Brief Description of the Drawings

FIG. 1A is a block diagram of the selective call receiver system in accordance with a preferred embodiment.

FIG 1B. is a system diagram in accordance with the preferred embodiment.

FIG. 2 is a protocol diagram of the system protocol in accordance with the preferred embodiment.

FIG. 3A is a flow diagram of the scanning procedure in accordance with the preferred embodiment.

FIG. 3B is a flow diagram of the scanning procedure in accordance with the preferred embodiment.

FIG. 3C is a flow diagram of the scanning procedure in accordance with the preferred embodiment.

FIG. 3D is a flow diagram of the scanning procedure in accordance with the preferred embodiment.

FIG. 3E is a flow diagram of the scanning procedure in accordance with the preferred embodiment.

FIG. 3F is a flow diagram of the scanning procedure in accordance with the preferred embodiment.

### Description of a Preferred Embodiment

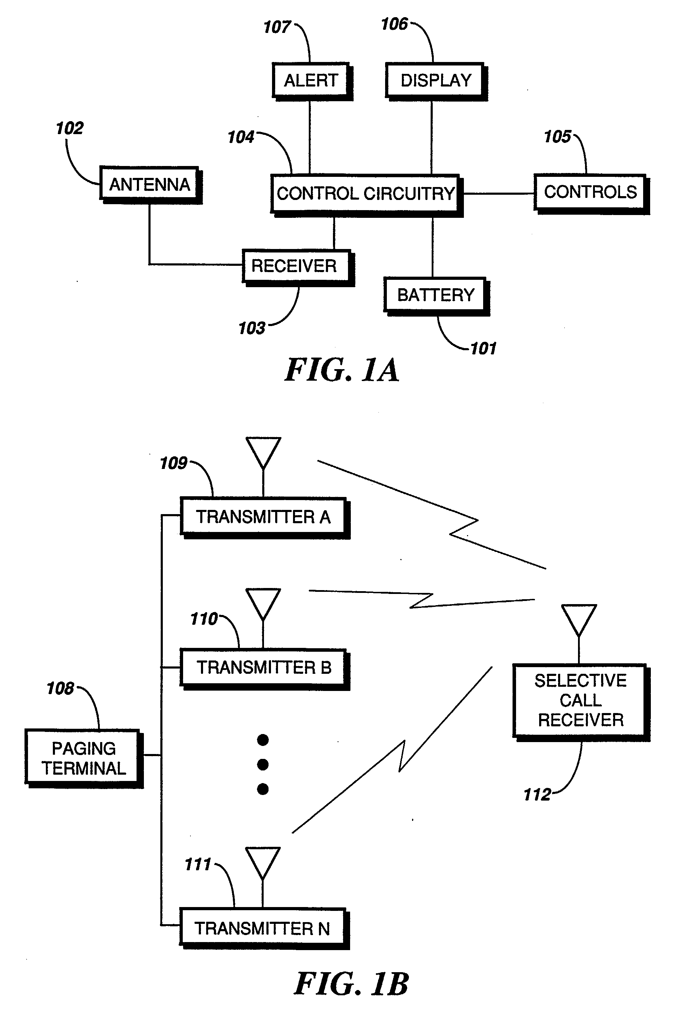

Referring to FIG. 1A, a battery 101 powered selective call receiver operates to receive a signal via an antenna 102. The receiver 103 demodulates the received signals using conventional techniques and forwards the demodulated signal to the control circuitry 104, which decodes and recovers information contained within the received signal. In accordance with the recovered information and user controls 105, the selective call receiver presents at least a portion of the information, such as by a display 106, and signals the user via a sensible alert 107 that a message has been received.

Referring to FIG. 1B, the multiple channel paging system comprises a paging terminal 108 that encodes information received from users for transmission by at least one of the plurality of transmitters shown. A radio frequency signal is broadcast from the plurality of transmitters that includes transmitter A, 109, transmitter B, 110, and transmitter N, 111 which typically are located in different metropolitan areas. The signal from each transmitter is transmitted on a frequency unique to that transmitter. The selective call receiver 112 will scan to receive signals broadcast in that respective metropolitan area.

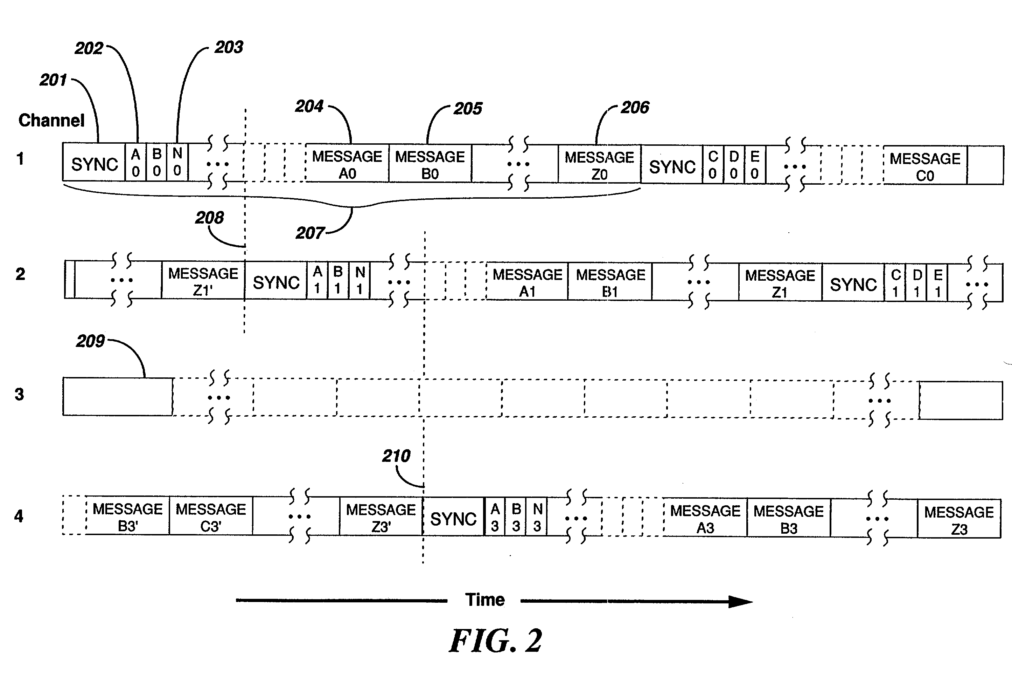

Referring to FIG. 2, an example of a preferred embodiment of a signalling protocol is shown. The duration of the individual packets is not shown to scale, but the overall timing of the frame and its internal packets are representative of the actual implementation. In this figure, four information channels are shown of which 1, 2, and 4 contain information that can be received and decoded to deliver a selective call message. Channel 3 209 is operating with a protocol such as GSC (Motorola's Golay Sequential Code) or POCSAG (Great Britain's Post Office Code Standardisation Advisory Group) that is not recognized by the scanning selective call receiver. The protocol that is running on channels 1, 2, and 4 uses an interleaved structure that contains a sync (synchronization) signal 201, selective call addresses A0, B0, 202, C0, D0, E0, and a network identification (I.D.) code N0, 203. The addresses A0, B0, 202 have corresponding information messages MESSAGE A0, 204, and MESSAGE B0, 205, that are used to convey information to an addressed selective call receiver. The data frame 207 for channel 1 extends from a first sync 201 to the last message MESSAGE Z0 206. This frame structure is continuously repeated on any given channel while updating the address, network I.D., and message fields with pertinent data. Frames are numbered in a rotating manner to allow the pager to receive only the frames that may contain information directed to that pager.

As shown in FIG. 2, the channels are ordered such that the next channel's sync signal for the same frame number always occurs at a time that is Δt time units from the last occurrence of sync on the present channel. The parameter At is a system constant that is set to allow for proper acquisition, decoding, and recognition of the network I.D., as well as enough time for the selective call receiver's frequency scanner to change channels and stabilize. Any frequency can be assigned to the channels shown because the only binding constraint in the preferred embodiment of the scanning algorithm is that the system must transmit successive frames on differing frequencies spaced by a time of Δt. This feature in conjunction with the ability of the receiver to order and prioritize the channel scan list greatly increases the utility of the selective call receiver. Once the channels are classified and prioritized, the receiver primarily scans the channels having information directed to the user. By prioritizing the available receive channels, the long "on time" used by the receiver during each scan when determining if the received channel has valid data is prevented. This provides the added benefit of extending the useful operating life of the receiver by conserving power. The time offset for all channels is identical when taken from the beginning of the synchronization word (SYNC) on the current channel to the start of the synchronization word on the next scan channel. This offset of Δt is shown be the dotted lines between channel 1 and 2 208, and channels 2 and 4, 210.

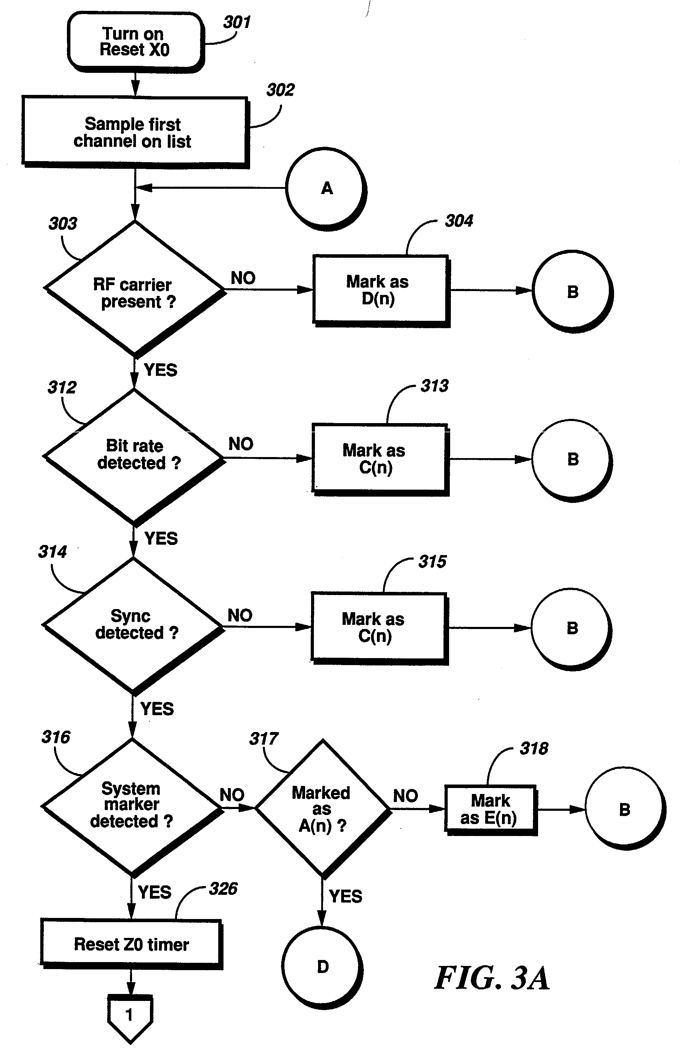

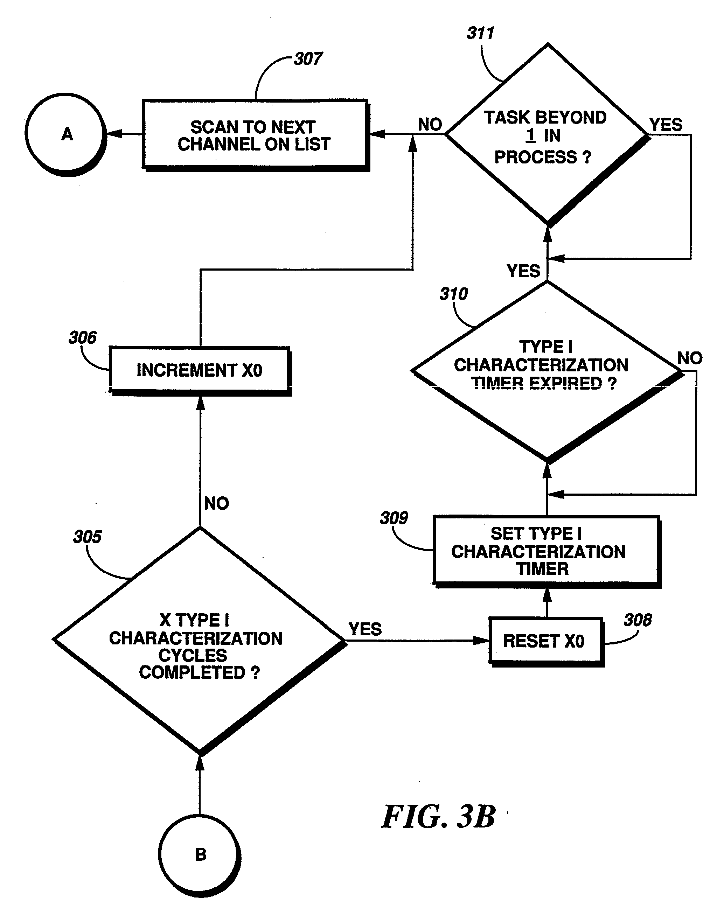

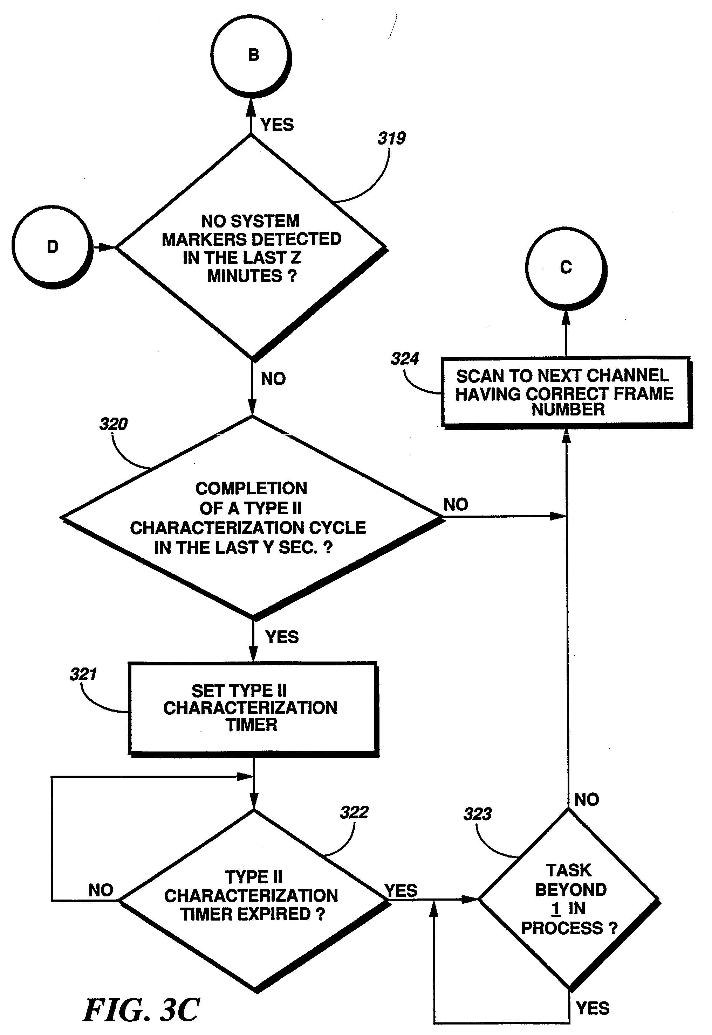

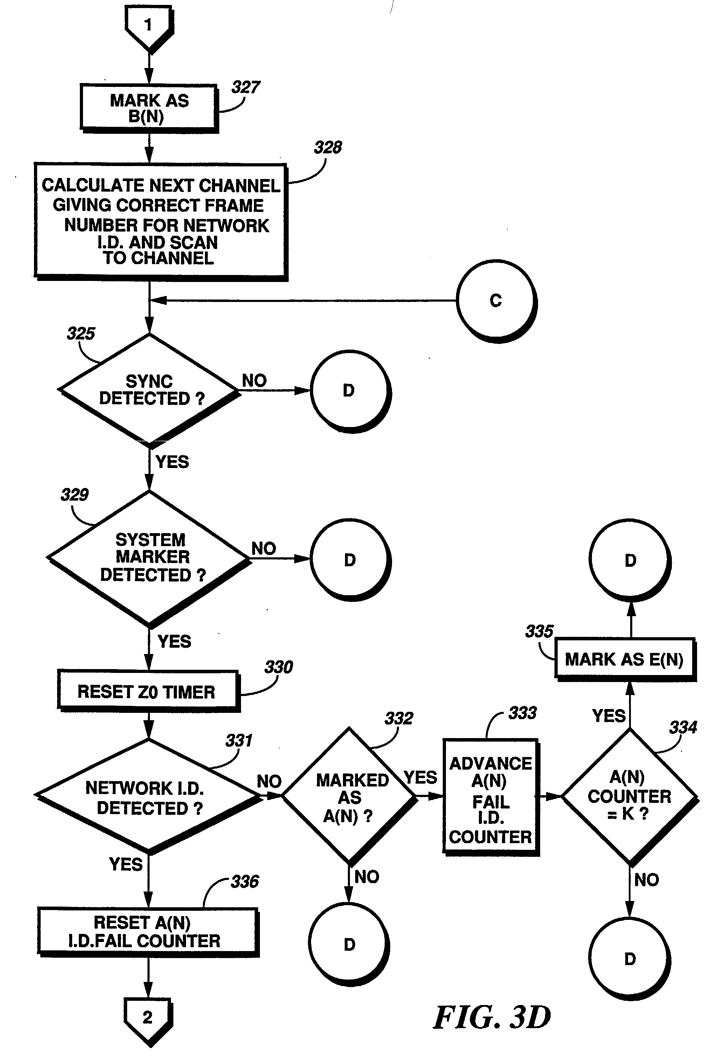

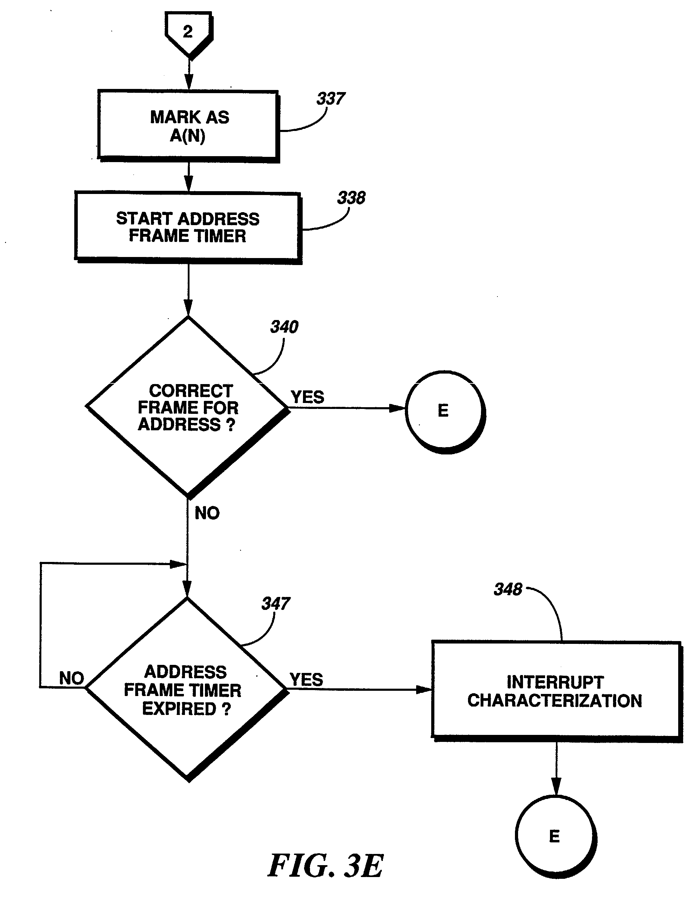

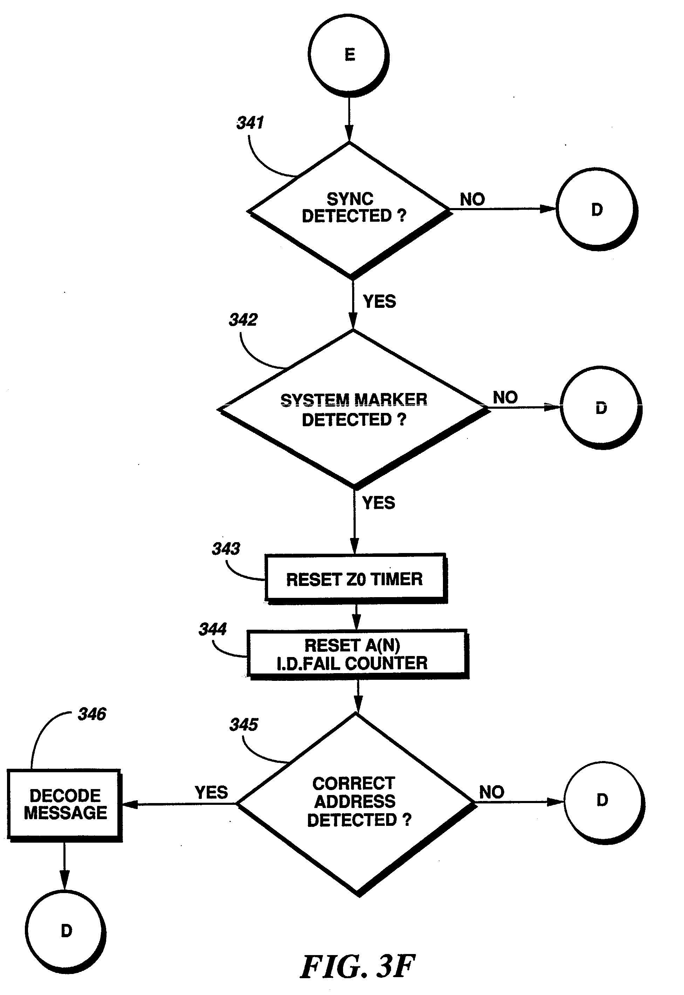

FIG. 3A, 3B, 3C, 3D, 3E, and 3F show related parts of the flow diagram representing the scanning algorithm implemented in accordance with the preferred embodiment of the present invention. The flow diagram may be implemented using either hardware or software in the control circuitry 104 of the selective call receiver.

Referring to FIG. 3A, when the selective call receiver shown in FIG. 1 is activated (at turn on), the X0 counter is reset 301 and the receiver samples the first channel of a predetermined list 302 programmed in the control circuitry 104 of the selective call receiver. If the presence of an RF carrier is detected, 303, the receiver proceeds to search for a recognizable bit rate, 312. When no RF carrier is present 303, the channel is marked as D(n) 304. In all cases thereafter, the notation "(n)" is used to show the assignment of an internal pointer that is used by the algorithm to reference a channel. After marking the channel as D(n), the process calls the type I characterization routine.

The type I characterization routine acts as the mechanism for "hard" channel characterization during power up or in a transmission fringe area where loss of signal has occurred causing the receiver to lose one or more channels. From the power-up state after turn-on the X0 counter is reset 301. Referring to FIG. 3B, Step 305 tests the value of the X0 counter to see if X type I characterization cycles have been completed. For a false result, the X0 counter is incremented 306, the receiver scans to the next channel on the list 307, and control returns to the RF carrier present test 303. When the X0 counter reaches the value X (meaning X number of channels have been scanned), step 305 returns a true result. With a true result from step 305, the X0 counter is reset to zero 308 and the type I characterization timer is set 309. The count value programmed in the type I characterization timer is selectable from either a code plug option or a dynamic system activity variable derived from historical channel activity by the receiver. After setting the type I characterization timer 309, control is passed to step 310. Step 310 loops until the type I characterization timer has expired. After the type I characterization timer has expired 310, step 311 checks for any tasks in progress in FIG. 3D, 3E, and 3F. This criteria is denoted by "Task beyond 1 in process ?" on the flow diagram. If a task is in progress, continuation is paused until the task is completed. If no task was in progress, step 311 passes control to step 307 which scans to the next channel on the list. Step 307 then returns control to step 303 the RF carrier present test. This ends the type I characterization.

Again referring to FIG. 3A, after a true result from step 303, step 312 tests the channel for a bit rate. If no bit rate is detected, the channel is marked as C(n) 313 and control is passed to the type I characterization routine. Upon the detection of a valid bit rate, step 312 passes control to step 314 and the channel is tested for the presence of a synchronization word. If no sync is detected, the channel is marked as C(n) 315 and control is passed to the type I characterization routine. When sync is detected by step 314, control is passed to step 316. Step 316 checks the data stream from the received information for a valid system marker. The system marker may be found in the synchronization word of all channels that are a member of a network in an area. It is used to denote members of a network that are sequenced relative to a master timing signal. These members have their transmitted frames offset by an integer multiple of Δt. If the system marker is not present step 316 passes control to step 317. Step 317 tests the present channel for being previously marked as an A(n) (primary information reception) channel. If the result of step 317 is false, the channel is marked as E(n) 318 and control is passed to the type I characterization routine. If the channel was previously marked as an A(n), control is transferred to step 319 on FIG. 3C. Step 319 is the entry point of the type II or "soft" characterization routine.

Referring to FIG. 3C, the purpose of the type II characterization routine is to allow for quick and positive classification of channels based on the use of the system marker and the timing relationship between network member channels. This routine will allow a number of "misses" on one or more channels without having to re-characterize the complete channel list. This is accomplished using a cycle that by definition scans the complete active channel list once per type II characterization cycle, then testing for the completion of that cycle in the last Y seconds. Because the type II characterization cycle is interrupt driven, an asynchronous parallel timer (not shown) implemented as a detached task is used to provide the timing reference for the test in step 320. This asynchronous timer starts at the instant that step 319 fails for the first time after the completion of a type II characterization cycle. By using this timer and knowing the number of channels on the scan list, the type II characterization routine will prevent the receiver from uncontrollably scanning through the channel list for information when some amount of valid data (eg. system markers) has been detected. As control is passed to the type II characterization routine, step 319 tests for the lack of a valid system marker detection in the last Z minutes. The variable Z is selected from a programmed receiver option. If no system markers have been detected in the last Z minutes, control is passed to the type I characterization routine. If any system markers were detected in the last Z minutes, control is passed to step 320. Step 320 tests for the completion of a type II characterization cycle in the last Y seconds. If this is true, the type II characterization timer 321 is set and control is passed to step 322. If false, control is passed to step 324. The purpose of step 322 is to allow the receiver to "sleep" for a period determined by the count programmed into the type II characterization timer. Advancement to step 323 is made when the type II characterization timer expires. The processing will continue to step 324 if no tasks are in progress in FIG. 3D, 3E, and 3F. This criteria is denoted by "Task beyond 1 in process ?" on the flow diagram. If any tasks are in process, control is not passed to step 324 until they are complete. When control is passed to step 324, the receiver proceeds to another channel having the correct frame number to find the network I.D. and timing to receive the complete or partial (as much as needed) information contained in the new frame on the new channel. The type II characterization routine terminates the test loop comprising all elements shown on FIG. 3C and passes control to step 325. After the complete channel list has been scanned, the type II characterization routine is complete.

Referring back to FIG. 3A, when step 316 is true, control is passed to step 326 and the Z0 timer is reset. After step 326, control is passed to step 327.

Referring to FIG. 3D, step 327 marks the present channel as B(n) then passes control to step 328. Step 328 calculates the next channel having the same frame number, that is, the frame number in which the network I.D. is expected. The receiver then proceeds to that next channel. Upon completion of step 328, control is transferred to step 325. Step 325 tests for presence of a synchronization word. Upon detection of a synchronization word, control is transferred to step 329. Step 329 tests for presence of a system marker. If true, step 330 resets the Z0 timer. Step 331 tests for a network I.D.. If false, step 332 checks the current channel to determine if it was previously marked as an A(n). If true, step 333 advances the A(n) fail I.D. counter. Step 334 tests the A(n) I.D. fail counter to see if it has reached the predetermined count of K. K determines the number of misses allowed before re-characterization of an A(n) channel. When step 334 is true, the channel is marked as E(n) 335. After marking the channel or when step 334 is false, the receiver returns to a type II characterization. When step 331 is true, the A(n) I.D. fail counter is reset 336.

The channel is then marked as A(n) 337 (Fig. 3E) and the address frame timer is started 338. Step 340 searches for the correct frame address. If false, step 347 waits until the address frame timer expires. Step 347 serves to allow reception of the correct data frame by the receiver. When step 347 is true, step 348 interrupts any characterization which may be in progress, then transfers control to step 341.

Referring to FIG. 3F, step 341 tests for sync. When present, step 342 tests for a system marker, and when found, resets the Z0 timer, step 343. Step 344 resets the A(n) I.D. fail counter. Then step 345 tests for the detection of a correct selective call address. If true, step 346 decodes a message and returns to type II characterization.

The notation A(n), B(n), C(n), D(n), and E(n) are used throughout this specification to denote decreasing levels of channel priority. The algorithm begins with a predetermined list of channels and a scan order associated with pre-programmed information, a successful channel history, and the home channel. From this point, the algorithm dynamically reclassifies the channels into a new prioritized list to be used as a basis for scanning operations. For example, a user's primary information channel would be classified as an A(n) and given interrupt priority over the scan list. The receiver continuously updates the channel list to create the beforementioned successful channel history.

When a system network member is found, scanning changes to a method wherein the channels are scanned based on their predetermined time order, each channel being separated from the previous channel by at least one Δt.

## Claims

1. An apparatus for prioritizing a receiver channel scanning order in a selective call receiver comprising:
means for classifying a list of predetermined channels in a priority order corresponding to an optimal sequencing of the list of predetermined channels such that those channels capable of carrying primary information intended for receipt by the selective call receiver are scanned before those capable of carrying secondary information intended for receipt by the selective call receiver, said means for classifying comprising:
means for receiving a radio frequency signal (102, 103) on one of a plurality of radio frequency channels capable of carrying information intended for receipt by the selective call receiver, the received radio frequency signal including signaling information, and
means for recovering signaling information (103, 104) from the received radio frequency signal, the recovered signaling information including at least a timing signal that provides a reference for updating the optimal sequencing of the list of predetermined channels such that the means for receiving selective call message information from the plurality of radio frequency channels may operate to receive selective call message information in accordance with said priority order (324) as determined by said optimal sequencing of the list of predetermined channels.

2. The apparatus according to claim 1 further comprising:
means for reclassifying the optimal sequencing of the list of predetermined channels to update the priority order, the reclassification means being responsive to the timing signal that provides a reference for updating the optimal sequencing of the list of predetermined channels.

3. The apparatus according to claim 1 further comprising:
means for advancing (103, 104, 302, 303, 312, 314, 316, 307) to a next channel in the list of predetermined channels.

4. The apparatus according to claim 3 wherein said means for advancing comprises:
means for proceeding to the next channel (305, 306, 307) prior to the completion of a predetermined number of characterization cycles.

5. The apparatus according to claim 3 wherein said means for advancing comprises:
means for synchronizing (326, 314, 316) a timer with said timing signal; and
means for proceeding (319) to another channel prior to the expiration of said timer.

6. The apparatus according to claim 3 wherein said timing signal is a synchronization word.

7. The apparatus according to claim 3 wherein said means for recovering further comprises:
means for detecting (345, 346) said second signal to provide a data stream.

8. The apparatus according to claim 7 further comprising:
means for examining (329, 331) the data stream for a system marker and a network identifier to assign a classification to each of said channels, the network identifier serving to uniquely identify a particular channel as belonging to a service provider and the system marker serving to denote a group of channels that are members of a network capable of conveying messaging information to the selective call receiver, the network belonging to at least one service provider; and
means for ordering (319) said channels with respect to said classification to provide the priority order as determined by the optimal sequencing of the list of predetermined channels, the optimal sequencing being updated in response to identifying those channels having the system marker and the network identifier corresponding with the service provider assigned to the selective call receiver and denoting those channels as primary information channels, and denoting those channels not having the system marker and the network identifier corresponding with the service provider assigned to the selective call receiver as secondary information channels.

9. A communications system (108, 109, 110, 111) for communicating signaling information and prioritizing a receiver channel scanning order for receiving the communicated signaling information, the communications system comprising:
at a paging system:
means for generating signaling information (108, 109, 110, 111) having at least one information frame (207);
means for transmitting (109, 110, 111) said signaling information in a first time slot on a first of a plurality of channels;
means for adjusting (108) the starting time of subsequent transmissions of said signaling information on a subsequent channel.
and at a selective call receiver:
means for detecting signaling information (312, 314, 316, 325, 329, 341, 342) during reception of said at least one information frame on one of said plurality of channels to provide detected signaling information; and
means for scanning other of the plurality of channels (307, 324) at a time and in a priority order as determined by an optimal sequencing of the plurality of channels such that those channels capable of carrying primary information intended for receipt by the selective call receiver are scanned before those capable of carrying secondary information intended for receipt by the selective call receiver, the time and priority order being determined at least in part by said detected signaling information.

10. The communications system according to claim 9 wherein said means for adjusting further comprises:
means for establishing a time offset from a transmitted synchronization codeword (108); and
means for queuing transmissions (108) of said signaling information on subsequent channels based at least in part on at least one period of said time offset relative to said transmitted synchronization codeword.

11. The communications system according to claim 9 wherein said means for scanning further comprises:
means for calculating a time offset (328) from a received synchronization codeword that was recovered from said detected signaling information; and
means for proceeding (307) to subsequent channels based at least in part on at least one period of said time offset relative to said received synchronization codeword.

12. A method for prioritizing a receiver channel scanning order in a selective call receiver, the method comprising the steps of:
detecting signaling information (312, 314, 316, 325, 329, 341, 342) during a frame time on one of a plurality of channels to provide detected signaling information; and
scanning other of the plurality of channels (307, 324) at a time determined at least in part by the detected signaling information during at least a portion of the same frame time;
wherein said detecting step includes:
recovering a synchronization codeword (325) and a network identifier (331) that uniquely identifies a particular channel as belonging to a service provider;
searching the recovered synchronization codeword for a system marker (329) that denotes a group of channels that are members of a network capable of conveying messaging information to the selective call receiver; and
ordering the plurality of channels (319) in priority order, the priority order being determined according to an optimal sequencing of the plurality of channels that is generated by identifying those channels having the system marker and the network identifier corresponding with the service provider assigned to the selective call receiver and denoting those channels as primary information channels, and denoting those channels not having the system marker and the network identifier corresponding with the service provider assigned to the selective call receiver as secondary information channels.

13. The method according to claim 12 wherein said scanning step comprises the steps of:
receiving a radio frequency signal (103, 104) on one of a plurality of channels capable of carrying information intended for receipt by the selective call receiver, the received radio frequency signal including signaling information;
recovering signaling information (302, 303) from the received radio frequency signal, the recovered signaling information including at least a timing signal (312, 314) that provides a reference for updating the optimal sequencing of a list of predetermined channels; and
advancing to a next channel in the list (307) of predetermined channels to characterize the next channel for inclusion as a primary or a secondary information channel.

14. The method according to claim 13 wherein said advancing step comprises the step of:
proceeding (319) to the next channel prior to the completion of a predetermined number of characterization cycles (305, 306).

15. A scanning communications system (108, 109, 110, 111) that prioritizes a receiver channel scanning order in a selective call receiver, the scanning communications system comprising:
means for classifying a list of predetermined channels to classify said channels in a priority order corresponding to an optimal sequencing of the list of predetermined channels such that those channels capable of carrying primary information intended for receipt by the selective call receiver are scanned before those capable of carrying secondary information intended for receipt by the selective call receiver, said means for classifying comprising:
means for receiving a radio frequency signal (102, 103) on one of a plurality of radio frequency channels capable of carrying information intended for receipt by the selective call receiver, the received radio frequency signal including signaling information, and
means for recovering signaling information (103, 104) from the received radio frequency signal, the recovered signaling information including at least a timing signal that provides a reference for updating the optimal sequencing of the list of predetermined channels; and
means for receiving selective call message information from the plurality of radio frequency channels in accordance with said priority order (324) as determined by said optimal sequencing of the list of predetermined channels.

16. The system according to claim 15 wherein said timing signal is a synchronization codeword.

17. The system according to claim 15 wherein said means for scanning further comprises:
means for advancing (103, 104, 302, 303, 312, 314, 316, 307) said means for receiving to a next channel in the list of predetermined channels.

18. The system according to claim 16 further comprising:
means for examining (329, 331) the data stream for a system marker and a network identifier to assign a classification to each of said channels, the network identifier serving to uniquely identify and denote a particular channel as belonging to a service provider and the system marker serving to denote a group of channels that are members of a network capable of conveying messaging information to the selective call receiver, the network belonging to at least one service provider; and
means for ordering (319) said channels with respect to said classification to provide the priority order as determined by the optimal sequencing of the list of predetermined channels such that those channels identified as having the system marker and the network identifier corresponding with the service provider assigned to the selective call receiver are further denoted as primary information channels and those not having the system marker and the network identifier corresponding with the service provider assigned to the selective call receiver are further denoted as secondary information channels.

19. A method for communicating signaling information and prioritizing a receiver channel scanning order for receiving the communicated signaling information in a selective call communications system (108, 109, 110, 111), the method comprising the steps of:
at a paging system:
generating signaling information (108, 109, 110, 111) having at least a first information frame;
transmitting (109, 110, 111) said signaling information in a first time slot on a first of a plurality of channels; and
adjusting (108) the starting time of subsequent transmissions of said signaling information on a subsequent channel; and
at a selective call receiver:
detecting (312, 314, 316, 325, 329, 341, 342) signaling information during reception of an information frame on one of said plurality of channels to provide detected signaling information; and
scanning (307, 324) other of the plurality of channels at a time and in a priority order as determined by an optimal sequencing of the plurality of channels such that those channels capable of carrying primary information intended for receipt by the selective call receiver are scanned before those capable of carrying secondary information intended for receipt by the selective call receiver, the time and priority order being determined at least in part by said detected signaling information.

20. The method according to claim 19 wherein said adjusting step further comprises the steps of:
establishing a time offset from a transmitted synchronization codeword (108); and
queuing transmissions (108) of said signaling information on subsequent channels based at least in part on at least one period of said time offset relative to said transmitted synchronization codeword.

21. The method according to claim 19 wherein said scanning step further comprises the steps of:
calculating a time offset (328) from a received synchronization codeword that was recovered from said detected signaling information; and
proceeding (307) to subsequent channels based at least in part on at least one period of said time offset relative to said received synchronization codeword.

## Patentansprüche

1. Vorrichtung zur Prioritätenverteilung innerhalb einer Empfängerkanal-Abtastreihenfolge in einem Selektivrufempfänger, umfassend:
Mittel zum Klassifizieren einer Liste vorgegebener Kanäle in Form einer Prioritätenreihenfolge, die einer optimalen Abarbeitungsreihenfolge der Liste der vorgegebenen Kanäle in einer solchen Weise entspricht, daß die Kanäle, die Primärinformationen zum Empfang durch den Selektivrufempfänger übertragen können, abgetastet werden, bevor jene Kanäle abgetastet werden, die Sekundärinformationen zum Empfang durch den Selektivrufempfänger übertragen können, wobei das Klassifikationsmittel umfaßt:
Mittel zum Empfang eines Hochfrequenzsignals (102, 103) auf einem aus einer Vielzahl von Hochfrequenzkanälen, die in der Lage sind, Informationen zum Empfang durch den Selektivrufempfänger zu übertragen, wobei das empfangene Hochfrequenzsignal Signalisierungsinformationen enthält, und
Mittel zum Wiederherstellen der Signalisierungsinformation (103, 104) aus dem empfangenen Hochfrequenzsignal, wobei die wiederhergestellte Signalisierungsinformation mindestens ein Synchronisationssignal enthält, das einen Bezugspunkt für die Aktualisierung der optimalen Abarbeitungsreihenfolge der Liste der vorgegebenen Kanäle bereitstellt, so daß das Mittel zum Empfang der Information der Selektivrufnachricht aus der Vielzahl der Hochfrequenzkanäle so arbeiten kann, daß es die Selektivrufnachricht
entsprechend der Prioritätenreihenfolge (324), wie sie durch die optimale Abarbeitungsreihenfolge der Liste der vorgegebenen Kanäle bestimmt ist, empfängt.

2. Vorrichtung gemäß Anspruch 1, desweiteren umfassend:
Mittel zum Neu-Klassifizieren der optimalen Abarbeitungsreihenfolge der Liste der vorgegebenen Kanäle, um die Prioritätenreihenfolge zu aktualisieren, wobei das Mittel zum Neu-Klassifizieren auf das Synchronisationssignal reagiert, das einen Bezugspunkt für die Aktualisierung der optimalen Abarbeitungsreihenfolge der Liste der vorgegebenen Kanäle bereitstellt.

3. Vorrichtung gemäß Anspruch 1, desweiteren umfassend:
Mittel zum Weiterschalten (103, 104, 302, 303, 312, 314, 316, 307) auf einen nächsten Kanal innerhalb der Liste der vorgegebenen Kanäle.

4. Vorrichtung gemäß Anspruch 3, wobei das Mittel zum Weiterschalten umfaßt:
Mittel zum Übergehen auf den nächsten Kanal (305, 306, 307) vor Beendigung einer vorgegebenen Anzahl Charakterisierungszyklen.

5. Vorrichtung gemäß Anspruch 3, wobei das Mittel zum Weiterschalten umfaßt:
Mittel zum Synchronisieren (326, 314, 316) eines Zeitgebers mit dem Synchronisationssignal; und
ein Mittel zum Übergehen (319) auf einen anderen Kanal, bevor der Zeitgeber abgelaufen ist.

6. Vorrichtung gemäß Anspruch 3, wobei das Synchronisationssignal ein Synchronisationswort ist.

7. Vorrichtung gemäß Anspruch 3, wobei die Mittel zum Wiederherstellen desweiteren umfassen:
ein Mittel zum Erkennen (345, 346) des zweiten Signals, um eine Datenfolge bereitzustellen.

8. Vorrichtung gemäß Anspruch 7, desweiteren umfassend:
Mittel zum Suchen (329, 331) eines Systemkennzeichners und eines Netzwerkidentifikators innerhalb der Datenfolge, um jedem der Kanäle eine Klassifikationsinformation zuzuweisen, wobei der Netzwerkidentifikator dazu dient, einen speziellen Kanal eindeutig als zu einem Personenruf-Servicegeber gehörig zu identifizieren, und wobei der Systemkennzeichner dazu dient, eine Gruppe von Kanälen zu kennzeichnen, die Teilelemente eines Netzwerkes sind, das in der Lage ist, Nachrichten an den Selektivrufempfänger zu übermitteln, wobei das Netzwerk zu mindestens einem Servicegeber gehört; und
Mittel zum Sortieren (319) der Kanäle bezüglich der Klassifizierung, um eine Prioritätenreihenfolge bereitzustellen, wie sie durch die optimale Abarbeitungsreihenfolge der Liste der vorgegebenen Kanäle bestimmt wird, wobei die optimale Abarbeitungsreihenfolge in Reaktion auf die Identifikation solcher Kanäle aktualisiert wird, die Systemkennzeichner und Netzwerkidentifikator, entsprechend dem Servicegeber, der dem Selektivruf-empfänger zugewiesen ist, besitzen, wobei diese Kanäle als Primär-informationskanäle gekennzeichnet werden, und wobei solche Kanäle, die Systemkennzeichner und Netz-werkidentifikator nicht aufweisen, die dem Servicegeber, der dem Selektivrufempfänger zugewiesen ist, entsprechen, als Sekundärinformationskanäle gekennzeichnet werden.

9. Kommunikationssystem (108, 109, 110, 111) zum Übertragen von Signalisierungsinformationen und zur Prioritätenverteilung innerhalb einer Empfängerkanal-Abtastreihenfolge zum Empfangen der übertragenen Signalisierungsinformation, wobei das Kommunikationssystem umfaßt:
in einem Personenrufsystem:
Mittel zum Erzeugen der Signalisierungsinformation (108, 109, 110, 111), die mindestens einen Informationsrahmen (207) besitzt;
Mittel zum Übertragen (109, 110, 111) der Signalisierungsinformation in einem ersten zeitschlitz auf einem ersten Kanal aus einer Vielzahl von Kanälen;
Mittel (108) zum Einstellen der Startzeit nachfolgender Übertragungen der Signalisierungsinformation auf einem nachfolgenden Kanal,
und in einem Selektivrufempfänger:
Mittel zum Erkennen der Signalisierungsinformation (312, 314, 316, 325, 329, 341, 342) während des Empfangs des mindestens einen Informationsrahmens auf einem Kanal aus der Vielzahl von Kanälen, um die erkannte Signalisierungsinformation bereitzustellen; und
Mittel zum Abtasten anderer Kanäle aus der Vielzahl von Kanälen (307, 324) zu einem Zeitpunkt und in einer Prioritätenreihenfolge, wie sie durch eine optimale Abarbeitungsreihenfolge der vielzahl der Kanäle derart bestimmt ist, daß jene Kanäle, die in der Lage sind, Primärinformationen zum Empfang durch den Selektivrufempfänger zu übertragen, abgetastet werden bevor jene Kanäle abgetastet werden, die in der Lage sind, Sekundärinformationen zum Empfang durch den selektivrufempfänger zu übertragen, wobei die Zeit- und Prioritätenreihenfolge zumindestens zum Teil durch die erkannte Signalisierungsinformation bestimmt wird.

10. Kommunikationssystem gemäß Anspruch 9, wobei das Mittel zum Einstellen desweiteren umfaßt:
Mittel zum Erzeugen einer Zeitverschiebung aus einem übertragenen Synchronisationscodewort (108); und
Mittel zum Aneinanderreihen von Übertragungen (108) der Signalisierungsinformation auf aufeinanderfolgenden Kanälen zumindestens teilweise auf der Grundlage von mindestens einer Periode der Zeitverschiebung relativ zu dem übertragenen Synchronisationscodewort.

11. Kommunikationssystem gemäß Anspruch 9, wobei das Mittel zum Abtasten desweiteren umfaßt:
Mittel zum Berechnen einer Zeitverschiebung (328) aus einem empfangenen Synchronisationscodewort, das aus der erkannten Signalisierungsinformation wiederhergestellt wurde; und
Mittel zum Übergehen (307) auf nachfolgende Kanäle zumindestens teilweise auf der Grundlage von mindestens einer Periode der Zeitverschiebung relativ zu dem übertragenen Synchronisationscodewort.

12. Verfahren zur Prioritätenverteilung innerhalb einer Empfängerkanal-Abtastreihenfolge in einem Selektivruf-empfänger, wobei das Verfahren die folgenden Schritte umfaßt:
Erkennen der Signalisierungsinformation (312, 314, 316, 325, 329, 341, 342) während der Übertragungszeit eines Rahmens auf einem Kanal aus einer Vielzahl von Kanälen, um die erkannte Signalisierungsinformation bereitzustellen; und
Abtasten anderer Kanäle aus der Vielzahl von Kanälen (307, 324) zu einem Zeitpunkt, der zumindestens zum Teil durch die während zumindestens eines Teils der Übertragungszeit desselben Rahmens erkannte Signalisierungsinformation bestimmt wird;
wobei der Erkennungsschritt umfaßt:
Wiederherstellen eines Synchronisationscodewortes (325) und eines Netzwerkidentifikators (331), der einen speziellen Kanal eindeutig als zu einem Servicegeber gehörend identifiziert;
Durchsuchen des wiederhergestellten Synchronisationcodewortes nach einem Systemkennzeichner (329), der eine Gruppe von Kanälen kennzeichnet, die Teilelemente eines Netzwerkes sind, das in der Lage ist, Nachrichten an den Selektivrufempfänger zu übermitteln; und
Anordnen der Vielzahl der Kanäle (319) in einer Prioritätenreihenfolge, wobei die Prioritätenreihenfolge entsprechend einer optimalen Abarbeitungsreihenfolge der Vielzahl der Kanäle festgelegt wird, die erzeugt wird durch Identifikation jener Kanäle, die den Systemkennzeichner und den Netzwerkidentifikator entsprechend dem Servicegeber, der dem Selektivrufempfänger zugewiesen ist, besitzen, wobei diese Kanäle als Primärinformationskanäle gekennzeichnet werden, und wobei solche Kanäle, die den Systemkennzeichner und den Netz-werkidentifikator entsprechend dem Servicegeber, der dem Selektivrufempfänger zugewiesen ist, nicht aufweisen, als Sekundärinformationskanäle gekennzeichnet werden.

13. Verfahren gemäß Anspruch 12, wobei der Abtastschritt die folgenden Schritte umfaßt:
Empfangen eines Hochfrequenzsignals (103, 104) auf einem Kanal aus einer Vielzahl von Kanälen, die in der Lage sind, Informationen zum Empfang durch den Selektivrufempfänger zu übertragen, wobei das empfangene Hochfrequenzsignal Signalisierungsinformationen enthält;
Wiederherstellen der Signalisierungsinformation (302, 303) aus dem empfangenen Hochfrequenzsignal, wobei die wiederhergestellte Signalisierungsinformation mindestens ein Synchronisationssignal enthält (312, 314), das einen Bezugspunkt für die Aktualisierung der optimalen Abarbeitungsreihenfolge einer Liste vorgegebener Kanäle bereitstellt; und
Weiterschalten auf einen nächsten Kanal aus der Liste (307) der vorgegebenen Kanäle, um diesen nächsten Kanal für das Hinzufügen zu den Primär- oder Sekundärinformationskanälen zu charakterisieren.

14. Verfahren gemäß Anspruch 13, wobei der Schritt des Weiterschaltens den folgenden Schritt umfaßt:
auf den nächsten Kanal übergehen (319), bevor eine vorgegebene Anzahl Charakterisierungszyklen beendet ist (305, 306).

15. Abtastendes Kommunikationssystem (108, 109, 110, 111), das eine Prioritätenverteilung innerhalb einer Empfängerkanal-Abtastreihenfolge in einem Selektivrufempfänger vornimmt, wobei das abtastende Kommunikationssystem umfaßt:
Mittel zum Klassifizieren einer Liste vorgegebener Kanäle in Form einer Prioritätenreihenfolge, die einer optimalen Abarbeitungsreihenfolge der Liste der vorgegebenen Kanäle in einer solchen Weise entspricht, daß jene Kanäle, die Primärinformationen zum Empfang durch den Selektivrufempfänger übertragen können, abgetastet werden, bevor jene Kanäle abgetastet werden, die Sekundär-informationen zum Empfang durch den Selektivrufempfänger übertragen können, wobei das Klassifikationsmittel umfaßt:
Mittel zum Empfang eines Hochfrequenzsignals (102, 103) auf einem Kanal aus einer Vielzahl von Hochfrequenzkanälen, die in der Lage sind, Informationen zum Empfang durch den Selektivrufempfänger zu übertragen, wobei das empfangene Hochfrequenzsignal Signalisierungsinformationen enthält, und
Mittel zum Wiederherstellen der Signalisierungsinformation (103, 104) aus dem empfangenen Hochfrequenzsignal, wobei die wiederhergestellte Signalisierungsinformation mindestens ein Synchronisationssignal enthält, das einen Bezugspunkt für die Aktualisierung der optimalen Abarbeitungsreihenfolge der Liste der vorgegebenen Kanäle bereitstellt; und
Mittel zum Empfang von Selektivrufnachrichten auf der Vielzahl der Hochfrequenzkanäle entsprechend der Prioritätenreihenfolge (324), wie sie durch die optimale Abarbeitungsreihenfolge der Liste der vorgegebenen Kanäle bestimmt ist.

16. System gemäß Anspruch 15, wobei das Synchronisationssignal ein Synchronisationscodewort ist.

17. System gemäß Anspruch 15, wobei das Abtastmittel desweiteren umfaßt:
Mittel zum Weiterschalten (103, 104, 302, 303, 312, 314, 316, 307) der Empfangsmittel auf einen nächsten Kanal aus der Liste der vorgegebenen Kanäle.

18. System gemäß Anspruch 16, desweiteren umfassend:
Mittel zum Suchen (329, 331) eines Systemkennzeichners und eines Netzwerkidentifikators innerhalb der Datenfolge, um jedem der Kanäle eine Klassifikationsinformation zuzuweisen, wobei der Netzwerkidentifikator dazu dient, einen speziellen Kanal eindeutig als zu einem Servicegeber gehörig zu identifizieren, und wobei der Systemkennzeichner dazu dient, eine Gruppe von Kanälen zu kennzeichnen, die Teilelemente eines Netzwerkes sind, das in der Lage ist, Nachrichten an den Selektivrufempfänger zu übermitteln, wobei das Netzwerk zu mindestens einem Servicegeber gehört; und
Mittel zum Sortieren (319) der Kanäle bezüglich der Klassifizierung, um eine Prioritätenreihenfolge bereitzustellen, wie sie durch die optimale Abarbeitungsreihenfolge der Liste der vorgegebenen Kanäle bestimmt wird, so daß jene Kanäle, von denen erkannt wird, daß sie den Systemkennzeichner und den Netzwerkidentifikator, entsprechend dem Servicegeber, der dem Selektivruf-empfänger zugewiesen ist, besitzen, weiterhin als Primärinformationskanäle gekennzeichnet werden, und daß jene Kanäle, die den Systemkennzeichner und den Netzwerkidentifikator entsprechend dem Servicegeber, der dem Selektivrufempfänger zugewiesen ist, nicht aufweisen, weiterhin als Sekundärinformationskanäle gekennzeichnet werden.

19. Verfahren zum Übertragen von Signalisierungsinformationen und zur Prioritätenverteilung innerhalb einer Empfängerkanal-Abtastreihenfolge zum Empfangen der übertragenen Signalisierungsinformation in einem Selektivrufübertragungssystem (108, 109, 110, 111), wobei das Verfahren die folgenden Schritte umfaßt:
in einem Personenrufsystem;
Erzeugen der Signalisierungsinformation (108, 109, 110, 111), die mindestens einen ersten Informationsrahmen besitzt;
Übertragen (109, 110, 111) der Signalisierungsinformation in einem ersten Zeitschlitz auf einem ersten Kanal aus einer Vielzahl von Kanälen; und
Einstellen (108) der Startzeit nachfolgender Übertragungen der Signalisierungsinformation auf einem nachfolgenden Kanal;
und in einem Selektivrufempfänger:
Erkennen der Signalisierungsinformation (312, 314, 316, 325, 329, 341, 342) während des Empfangs eines Informationsrahmens auf einem Kanal aus der Vielzahl von Kanälen, um die erkannte Signalisierungsinformation bereitzustellen; und
Abtasten (307, 324) anderer Kanäle aus der Vielzahl von Kanälen zu einem Zeitpunkt und in einer Prioritätenreihenfolge, wie sie durch eine optimale Abarbeitungsreihenfolge der Vielzahl der Kanäle derart bestimmt ist, so daß jene Kanäle, die in der Lage sind, Primärinformationen zum Empfang durch den Selektiv-rufempfänger zu übertragen, abgetastet werden bevor jene Kanäle abgetastet werden, die in der Lage sind, Sekundärinformationen zum Empfang durch den Selektivrufempfänger zu übertragen, wobei die Zeitund Priori-tätenreihenfolge zumindestens zum Teil durch die erkannte Signalisierungsinformation bestimmt wird.

20. Verfahren gemäß Anspruch 19, wobei der Schritt des Einstellens desweiteren die folgenden Schritte umfaßt:
Erzeugen einer Zeitverschiebung aus einem übertragenen Synchronisationscodewort (108); und
Aneinanderreihen von Übertragungen (108) der Signalisierungsinformation auf aufeinanderfolgenden Kanälen zumindestens teilweise auf der Grundlage von mindestens einer Periode der Zeitverschiebung relativ zu dem übertragenen Synchronisationscodewort.

21. Verfahren gemäß Anspruch 19, wobei der Schritt des Abtastens desweiteren die folgenden Schritte umfaßt:
Berechnen einer Zeitverschiebung (328) aus einem empfangenen Synchronisationscodewort, das aus der erkannten Signalisierungsinformation wiederhergestellt wurde; und
Übergehen (307) auf nachfolgende Kanäle zumindestens teilweise auf der Grundlage von mindestens einer Periode der Zeitverschiebung relativ zu dem übertragenen Synchronisationscodewort.

## Revendications

1. Appareil permettant d'affecter une priorité à un ordre de balayage de voie de récepteur dans un récepteur d'appels sélectifs comprenant :
un moyen permettant de classer une liste de voies prédéterminées dans un ordre de priorité correspondant à une mise en séquence optimale de la liste de voies prédéterminées de telle sorte que les voies capables de transporter des informations primaires destinées à être reçues par le récepteur d'appels sélectifs sont balayées avant celles qui sont capables de transporter des informations secondaires destinées à être reçues par le récepteur d'appels sélectifs, ledit moyen de classement comprenant :
un moyen permettant de recevoir un signal radiofréquence (102, 103) sur une voie radiofréquence parmi une pluralité de voies radiofréquences capable de transporter des informations destinées à être reçues par le récepteur d'appels sélectifs, le signal radiofréquence reçu comportant des informations de signalisation, et
un moyen permettant de récupérer des informations de signalisation (103, 104) dans le signal radiofréquence reçu, les informations de signalisation récupérées comportant au moins un signal de temporisation qui fournit une référence permettant de mettre à jour la mise en séquence optimale de la liste de voies prédéterminées de telle sorte que le moyen permettant de recevoir des informations de message d'appel sélectif de la pluralité de voies radiofréquences peut fonctionner de façon à recevoir des informations de message d'appel sélectif en fonction dudit ordre de priorité (324) tel que déterminé par ladite mise en séquence optimale de la liste de voies prédéterminées.

2. Appareil selon la revendication 1, comprenant en outre :
un moyen permettant de reclasser la mise en séquence optimale de la liste de voies prédéterminées de façon à mettre à jour l'ordre de priorité, le moyen de reclassement réagissant au signal de temporisation qui fournit une référence permettant de mettre à jour la mise en séquence optimale de la liste de voies prédéterminées.

3. Appareil selon la revendication 1, comprenant en outre :
un moyen de progression (103, 104, 302, 303, 312, 314, 316, 307) jusqu'à une voie suivante dans la liste de voies prédéterminées.

4. Appareil selon la revendication 3, dans lequel ledit moyen de progression comprend :
un moyen permettant de passer à la voie suivante (305, 306, 307) avant la fin d'un nombre prédéterminé de cycles de caractérisation.

5. Appareil selon la revendication 3, dans lequel ledit moyen de progression comprend :
un moyen permettant de synchroniser (326, 314, 316) un minuteur avec ledit signal de temporisation ; et
un moyen permettant de passer (319) à une autre voie avant l'arrivée en fin de course dudit minuteur.

6. Appareil selon la revendication 3, dans lequel ledit signal de temporisation est un mot de synchronisation.

7. Appareil selon la revendication 3, dans lequel ledit moyen de récupération comprend en outre :
un moyen permettant de détecter (345, 346) ledit deuxième signal pour fournir un flux de données.

8. Appareil selon la revendication 7, comprenant en outre :
un moyen permettant d'examiner (329, 331) le flux de données pour qu'un marqueur du système et un identificateur de réseau attribuent un classement à chacune desdites voies, l'identificateur du réseau servant à identifier uniquement une voie particulière comme appartenant à un prestataire de services et le marqueur du système servant à désigner un groupe de voies qui sont membres d'un réseau capable d'acheminer des informations de messagerie jusqu'au récepteur d'appels sélectifs, le réseau appartenant à au moins un prestataire de services ; et
un moyen permettant d'ordonner (319) lesdites voies par rapport audit classement de façon à fournir l'ordre de priorité déterminé par la mise en séquence optimale de la liste de voies prédéterminées, la mise en séquence optimale étant mise à jour en réponse à l'identification des voies présentant le marqueur du système et l'identificateur du réseau correspondant au prestataire de services attribué au récepteur d'appels sélectifs et désignant ces voies par voies d'information primaire, et désignant les voies ne présentant pas le marqueur du système et l'identificateur du réseau correspondant au prestataire de services attribué au récepteur d'appels sélectifs par voies d'information secondaire.

9. Système de communication (108, 109, 110, 111) permettant de communiquer des informations de signalisation et affectant une priorité à un ordre de balayage de voie de récepteur pour recevoir les informations de signalisation communiquées, le système de communication comprenant :
au niveau d'un système d'appel de personnes :
un moyen -permettant de générer des informations de signalisation (108, 109, 110, 111) ayant au moins une trame d'information (207) ;
un moyen permettant de transmettre (109, 110, 111) lesdites informations de signalisation dans un premier créneau temporel sur une première voie parmi une pluralité de voies ;
un moyen permettant d'ajuster (108) le point de départ des transmissions ultérieures desdites informations de signalisation sur une voie suivante.
et au niveau d'un récepteur d'appels sélectifs :
un moyen permettant de détecter des informations de signalisation (312, 314, 316, 325, 329, 341, 342) pendant la réception desdites au moins une trame d'information sur une voie de ladite pluralité de voies de façon à fournir les informations de signalisation détectées ; et
un moyen permettant de balayer une autre voie de la pluralité de voies (307, 324) à la fois et selon un ordre de priorité déterminé par une mise en séquence optimale de la pluralité de voies de telle sorte que les voies capables de transporter des informations primaires destinées à être reçues par le récepteur d'appels sélectifs sont balayées avant celles qui sont capables de transporter des informations secondaires destinées à être reçues par le récepteur d'appels sélectifs, le moment et l'ordre de priorité étant déterminés au moins en partie par lesdites informations de signalisation détectées.

10. Système de communication selon la revendication 9, dans lequel ledit moyen d'ajustement comprend en outre :
un moyen permettant d'établir un décalage temporel à partir d'un mot code de synchronisation transmis (108) ; et
un moyen permettant de mettre en file d'attente des transmissions (108) desdites informations de signalisation sur des voies suivantes fondé au moins en partie sur au moins une période dudit décalage temporel par rapport audit mot code de synchronisation transmis.

11. Système de communication selon la revendication 9, dans lequel ledit moyen de balayage comprend en outre :
un moyen permettant de calculer un décalage temporel (328) à partir d'un mot code de synchronisation reçu qui a été récupéré à partir desdites informations de signalisation détectées ; et
un moyen permettant de passer (307) sur des voies suivantes fondé en partie sur au moins une période dudit décalage temporel par rapport audit mot code de synchronisation reçu.

12. Procédé permettant d'affecter une priorité à un ordre de balayage de voie de récepteur dans un récepteur d'appels sélectifs, le procédé comprenant les étapes de :
détection d'informations de signalisation (312, 314, 316, 325, 329, 341, 342) pendant la durée de l'intervalle de trame sur une voie parmi une pluralité de voies de façon à fournir des informations de signalisation détectées ; et
balayage d'une autre voie de la pluralité de voies (307, 324) à un moment déterminé au moins en partie par les informations de signalisation détectées pendant au moins une partie de la même durée de l'intervalle de trame ;
dans lequel ladite étape de détection comporte :
la récupération d'un mot code de synchronisation (325) et d'un identificateur de réseau (331) qui identifie uniquement une voie particulière comme appartenant à un prestataire de services ;
la recherche du mot code de synchronisation récupéré pour un marqueur du système (329) qui désigne un groupe de voies qui sont membres d'un réseau capable d'acheminer des informations de messagerie jusqu'au récepteur d'appels sélectifs ; et
le fait d'ordonner la pluralité de voies (319) selon l'ordre de priorité, l'ordre de priorité étant déterminé en fonction d'une mise en séquence optimale de la pluralité de voies qui est généré par l'identification des voies présentant le marqueur du système et l'identificateur du réseau correspondant au prestataire de services attribué au récepteur d'appels sélectifs et désignant ces voies par voies d'information primaire et désignant les voies ne présentant pas le marqueur du système et l'identificateur du système correspondant au prestataire de services attribué au récepteur d'appels sélectifs par voies d'information secondaire.

13. Procédé selon la revendication 12, dans lequel ladite étape de balayage comprend les étapes de :
réception d'un signal radiofréquence (103, 104) sur une voie de la pluralité de voies capable de transporter des informations destinées à être reçues par le récepteur d'appels sélectifs, le signal radiofréquence reçu comportant des informations de signalisation ;
récupération d'informations de signalisation (302, 303) dans le signal radiofréquence reçu, les informations de signalisation récupérées comportant au moins un signal de temporisation (312, 314) qui fournit une référence pour mettre à jour la mise en séquence optimale d'une liste de voies prédéterminées ; et
progression jusqu'à une voie suivante dans la liste (307) de voies prédéterminées de façon à caractériser la voie suivante en vue de son inclusion en tant que voie d'information primaire ou secondaire.

14. Procédé selon la revendication 13, dans lequel ladite étape de progression comprend l'étape de :
passage (319) à la voie suivante avant la fin d'un nombre prédéterminé de cycles de caractérisation (305, 306).

15. Système de communication par balayage (108, 109, 110, 111) qui affecte une priorité à un ordre de balayage de voie de récepteur dans un récepteur d'appels sélectifs, le système de communication par balayage comprenant :
un moyen permettant de classer une liste de voies prédéterminées de façon à classer lesdites voies selon un ordre de priorité correspondant à une mise en séquence optimale de la liste de voies prédéterminées de telle sorte que les voies capables de transporter des informations primaires destinées à être reçues par le récepteur d'appels sélectifs sont balayées avant celles qui sont capables de transporter des informations secondaires destinées à être reçues par le récepteur d'appels sélectifs, ledit moyen de classement comprenant :
un moyen permettant de recevoir un signal radiofréquence (102, 103) sur une voie radiofréquence de la pluralité de voies radiofréquences capable de transporter des informations destinées à être reçues par le récepteur d'appels sélectifs, le signal radiofréquence reçu comportant des informations de signalisation, et
un moyen permettant de récupérer des informations de signalisation (103, 104) dans le signal radiofréquence reçu, les informations de signalisation récupérées comportant au moins un signal de temporisation qui fournit une référence permettant de remettre à jour la mise en séquence optimale de la liste de voies prédéterminées ; et
un moyen permettant de recevoir des informations de message d'appels sélectifs de la pluralité de voies radiofréquences en fonction dudit ordre de priorité (324) déterminé par ladite mise en séquence optimale de la liste de voies prédéterminées.

16. Système selon la revendication 15, dans lequel ledit signal de temporisation est un mot code de synchronisation.

17. Système selon la revendication 15, dans lequel ledit moyen de balayage comprend en outre :
un moyen permettant de faire progresser (103, 104, 302, 303, 312, 314, 316, 307) ledit moyen de réception jusqu'à une nouvelle voie dans la liste de voies prédéterminées.

18. Système selon la revendication 16 comprenant en outre :
un moyen permettant d'examiner (329, 331) le flux de données pour qu'un marqueur du système et un identificateur de réseau attribuent un classement à chacune desdites voies, l'identificateur du réseau servant à identifier uniquement une voie particulière comme appartenant à un prestataire de services et le marqueur du système servant à désigner un groupe de voies qui sont membres d'un réseau capable d'acheminer des informations de messagerie jusqu'au récepteur d'appels sélectifs, le réseau appartenant à au moins un prestataire de services ; et
un moyen permettant d'ordonner (319) lesdites voies par rapport audit classement de façon à fournir l'ordre de priorité déterminé par la mise en séquence optimale de la liste de voies prédéterminées, la mise en séquence optimale étant remise à jour en réponse à l'identification des voies présentant le marqueur du système et l'identificateur du réseau correspondant au prestataire de services attribué au récepteur d'appels sélectifs et désignant ces voies par voies d'information primaire, et désignant les voies ne présentant pas le marqueur du système et l'identificateur du réseau correspondant au prestataire de services attribué au récepteur d'appels sélectifs par voies d'information secondaire.

19. Procédé permettant de communiquer des informations de signalisation et affectant une priorité à un ordre de balayage de voie de récepteur pour recevoir les informations de signalisation communiquées, le système de communication comprenant les étapes de:
au niveau d'un système d'appel de personnes :
génération d'informations de signalisation (108, 109, 110, 111) ayant au moins une trame d'information (207) ;
transmission (109, 110, 111) desdites informations de signalisation dans un premier créneau temporel sur une première voie parmi une pluralité de voies ;
ajustement (108) du point de départ des transmissions ultérieures desdites informations de signalisation sur une voie suivante.
et au niveau d'un récepteur d'appels sélectifs :
détection (312, 314, 316, 325, 329, 341, 342) d'informations de signalisation pendant la réception desdites au moins une trame d'information sur une voie de ladite pluralité de voies de façon à fournir les informations de signalisation détectées ; et
balayage (307, 324) d'une autre voie de la pluralité de voies à la fois et selon un ordre de priorité déterminé par une mise en séquence optimale de la pluralité de voies de telle sorte que les voies capables de transporter des informations primaires destinées à être reçues par le récepteur d'appels sélectifs sont balayées avant celles qui sont capables de transporter des informations secondaires destinées à être reçues par le récepteur d'appels sélectifs, le temps et l'ordre de priorité étant déterminés au moins en partie par lesdites informations de signalisation détectées.

20. Procédé selon la revendication 19, dans lequel ladite étape d'ajustement comprend en outre les étapes de :
établissement d'un décalage temporel à partir d'un mot code de synchronisation transmis (108) ; et
mise en file d'attente de transmissions (108) desdites informations de signalisation sur des voies suivantes fondée au moins en partie sur au moins une période dudit décalage temporel par rapport audit mot code de synchronisation transmis.

21. Procédé selon la revendication 19, dans lequel ladite étape de balayage comprend en outre les étapes de :
calcul d'un décalage temporel (328) à partir d'un mot code de synchronisation reçu qui a été récupéré à partir desdites informations de signalisation détectées ; et
passage (307) sur des voies suivantes fondé en partie sur au moins une période dudit décalage temporel par rapport audit mot code de synchronisation reçu.
